# EUROPEAN PATENT SPECIFICATION

(11) **EP 4 123 851 B1**
(45) Date of publication and mention of the grant of the patent: **09.10.2024**
(21) Application number: 21186498.8
(22) Date of filing: 19.07.2021
(51) Int. Cl.: H02G 1/00, H02G 1/12

(54) **PLIERS**
ZANGE
PINCES

(43) Date of publication of application: 25.01.2023
(73) Proprietor: Kauw Yehi Industrial Co., Ltd., New Taipei City 236 (TW)
(72) Inventor: YEN, Yu-Ting, 236 New Taipei City (TW)
(74) Representative: 2K Patentanwälte Blasberg Kewitz & Reichel

(56) References cited:
- CN-U- 208 062 684
- CN-U- 209 665 157
- US-A- 1 375 984
- US-A- 1 514 488

## Description

### BACKGROUND

### Technical Field

The technical field relates to a hand tool, and particularly relates to a pliers with multifunction. Such pliers are known e.g. from US 1 514 488 A and CN 208 062 684 U.

### Description of Related Art

A hand tools is one of the necessary tools for performing telecommunications maintenance or water and electricity configuration. For example, a multifunction pliers is a hand tool used for stripping outer insulation layers of cables or wires to perform operations of cutting, sharpening and clamping etc., to the workpiece.

Moreover, the handles of the multifunctional hand tool of the related art has to be opened to expose the knives on inner sides of two pliers to perform operations of cutting and chipping. However, since multiple kinds of knives are provided on inner sides of the two pliers, the user may likely be injured when performing operations of cutting between the two pliers. Additionally, other portions of the workpiece may be damaged when the cutting is performed on the middle part of the workpiece by using the knives on inner sides of the two pliers.

In view of the above drawbacks, the inventor proposes this disclosure based on his expert knowledge and elaborate researches in order to solve the problems of related art.

### SUMMARY OF THE DISCLOSURE

One object of this disclosure is to provide a pliers with multifunction, wherein one of the first pliers back and the second pliers back is provided with a chipping blade configured in a concave arc shape for chipping, so as to enhance the safety of use.

This object is achieved by a pliers according to claim 1. The pliers includes a first pliers body and a second pliers body. The first pliers body includes a first handle and a first clamp connected to a front end of the first handle. A first pliers knife and a first pliers back are disposed on opposite sides of the first clamp. The second pliers body includes a second handle and a second clamp connected to a front end of the second handle. A second pliers knife and a second pliers back are disposed on opposite sides of the second clamp. The second clamp is pivotally connected with the first clamp to make the first pliers knife be connectable with the second pliers knife correspondingly to clamp or cut. One of the first pliers back and the second pliers back is provided with a chipping blade configured in a concave arc shape for chipping. The chipping blade comprises an arc-shaped recess and a straight cut extended from the arc-shaped recess. The arc-shaped recess comprises a blade angle varied on different locations. A range of the blade angle is equal to or greater than 120 degrees and equal to or less than 135 degrees. A maximum value of the blade angle is located on a bottom of the arc-shaped recess. The straight cut comprises a cut angle, and a range of the cut angle is equal to or greater than 85 degrees and equal to or less than 90 degrees.

In comparison with the related art, the pliers of this disclosure is provided with a chipping blade configured in a concave arc shape for chipping and disposed on one of the first pliers back and the second pliers back. As a result, the chipping may be performed without causing damage to the workpiece. Additionally, when the user performs the chipping, the first clamp and the second clamp are held in a closed status to prevent the user from touching the knives. Moreover, the chipping blade of this disclosure includes an arc-shaped recess and a straight cut, and the blade angles of the arc-shaped recess and the straight cut may be less sharp. Thus, the operation of chipping is realized mainly by the bottom of the arc-shaped recess to avoid injury when the user touches the edge of the chipping blade, so as to enhance the safety of use.

### BRIEF DESCRIPTION OF THE DRAWINGS

The features of the disclosure believed to be novel are set forth with particularity in the appended claims. The disclosure itself, however, may be best understood by reference to the following detailed description of the disclosure, which describes a number of exemplary embodiments of the disclosure, taken in conjunction with the accompanying drawings, in which:
FIG 1 is a perspective schematic view of the pliers of this disclosure.
FIG 2 is a perspective exploded view of the pliers with multifunction of this disclosure.
FIG 3 is a front view of the pliers with multifunction of this disclosure when the pliers bodies are opened.
FIG 4 is a front view of the pliers with multifunction of this disclosure when the pliers bodies are closed.
FIG 5 is a front view of the first pliers body of the pliers with multifunction of this disclosure.
FIG 6 is a cross sectional view along the line 6-6 of the FIG 5.
FIG 7 is a cross sectional view along the line 7-7 of the FIG 5.
FIG 8 is an operation schematic view of the pliers with multifunction of this disclosure when performing the chipping.

### DETAILED DESCRIPTION

The technical contents of this disclosure will become apparent with the detailed description of embodiments accompanied with the illustration of related drawings as follows. It is intended that the embodiments and drawings disclosed herein are to be considered illustrative rather than restrictive.

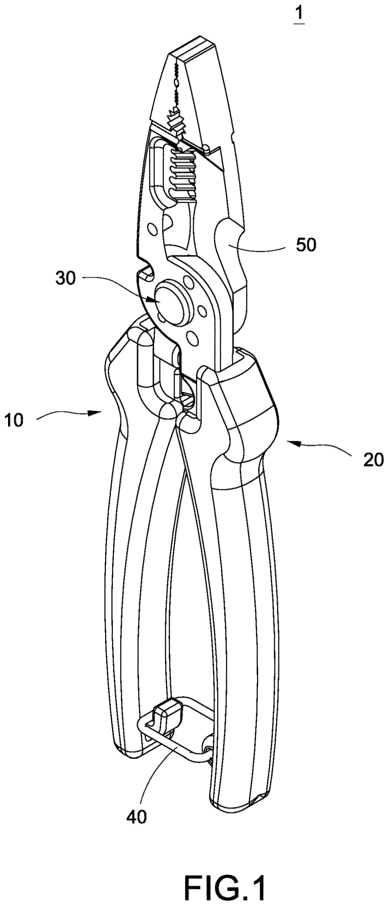

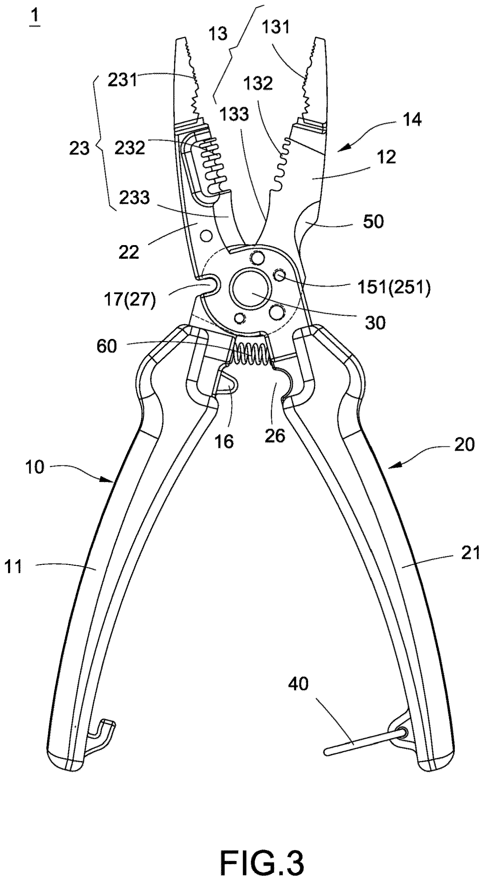

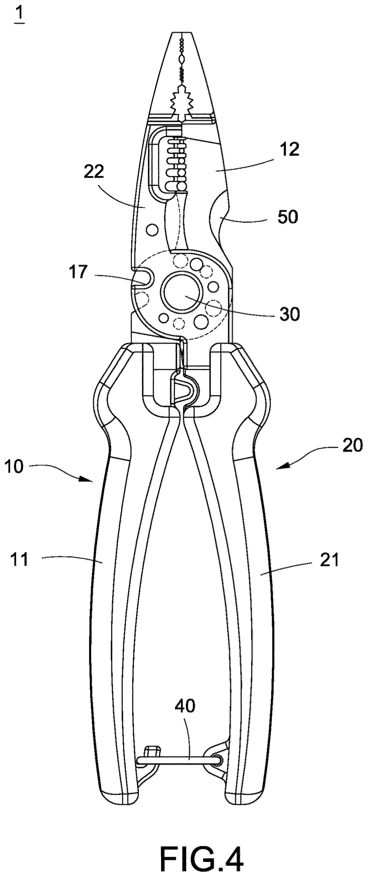

Please refer to FIG 1 to FIG 4, which depict a perspective schematic view and a perspective explosion view of the pliers with multifunction of this disclosure, a front view of the pliers with multifunction of this disclosure when the pliers bodies are opened, and a front view of the pliers with multifunction of this disclosure when the pliers bodies are closed. A pliers 1 (for example, but not limited to, a crimping pliers) with multifunction of this disclosure includes a first pliers body 10 and a second pliers body 20. The first pliers body 10 and the second pliers body 20 are pivotally connected through a pivot assembly 30 to perform operations such as clamping, crimping, cutting, stripping and chipping. In this embodiment, the pliers 1 further includes a buckle 40. The buckle 40 is connected to the bottom of one of the first pliers body 10 and the second pliers body 20. Accordingly, the first pliers body 10 is engaged with the second pliers body 20 through the buckle 40 without being separated.

As shown in the figures, the first pliers body 10 includes a first handle 11 and a first clamp 12 connected to the front end of the first handle 11. A first pliers knife 13 and a first pliers back 14 are disposed on opposite sides of the first clamp 12.

Similarly, the second pliers body 20 includes a second handle 21 and a second clamp 22 connected to the front end of the second handle 21. A second pliers knife 23 and a second pliers back 24 are disposed on opposite sides of the second clamp 22. Additionally, the second clamp 22 is pivotally connected with the first clamp 12 to make the first pliers knife 13 and the second pliers knife 23 be connectable correspondingly to perform operations of clamping or cutting. It should be noted that one of the first pliers back 14 and the second pliers back 24 is provided with a chipping blade 50 configured in a concave arc shape for chipping. In this embodiment, the chipping blade 50 is disposed on the first pliers back 14.

Moreover, the pliers 1 further includes a spring 60. The spring 60 is disposed between the first pliers body 10 and the second pliers body 20 to provide the restoring force therebetween.

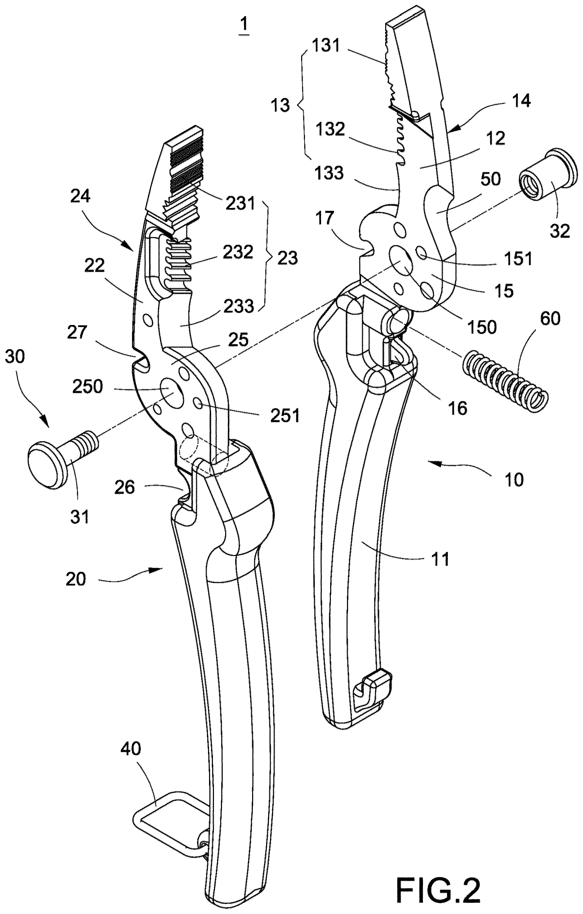

Please refer to FIG 2, the pivot assembly 30 includes a bolt 31 and a stud 32. The first pliers body 10 and the second pliers body 20 are pivotally combined with each other through the bolt 31 and the stud 32.

Specifically, the first pliers body 10 includes a first transition section 15 located between the first handle 11 and the first clamp 12, and the first transition section 15 includes a first perforation 150. Additionally, the second pliers body 20 includes a second transition section 25 located between the second handle 21 and the second clamp 22. The second transition section 25 includes a second perforation 250 disposed corresponding to the first perforation 150. The bolt 31 and the stud 32 of the pivot assembly 30 are inserted in the first perforation 150 and the second perforation 250. As a result, the first pliers body 10 and the second pliers body 20 are pivotally connected, and the pliers 1 may be used to perform multiple operations to a workpiece.

In more detail, the first transition section 15 is provided with a plurality of first cutting holes 151 around the first perforation 150. Additionally, the second transition section 25 is provided with a plurality of second cutting holes 251 around the second perforation 250. The first cutting holes 151 and the second cutting holes 251 are arranged correspondingly and are connectable to perform cutting to the workpiece.

Furthermore, the first clamp 12 includes a first bending protrusion 16 located adjacent to a lower side of the first transition section 15 and a first U-shaped notch 17 located adjacent to an upper side of the first transition section 15. Furthermore, the second clamp 22 includes a second bending notch 26 located adjacent to a lower side of the second transition section 25 and a second U-shaped notch 27 located adjacent to an upper side of the second transition section 25. The first bending protrusion 16 and the second bending notch 26 are arranged correspondingly and are connectable to perform bending to the workpiece. The first U-shaped notch 17 and the second U-shaped notch 27 are arranged correspondingly and are connectable to perform cutting to the workpiece with high hardness.

In one embodiment of this disclosure, the first pliers knife 13 includes a first clamping section 131, a first stripping section 132 and a first cutting section 133. Moreover, the second pliers knife 23 includes a second clamping section 231, a second stripping section 232 and a second cutting section 233. The first clamping section 131 and the second clamping section 231 are arranged correspondingly and are connectable to perform clamping to the workpiece. The first stripping section 132 and the second stripping section 232 are arranged correspondingly and are connectable to perform stripping to the workpiece. The first cutting section 133 and the second cutting section 233 are arranged correspondingly and are connectable to perform cutting to the workpiece.

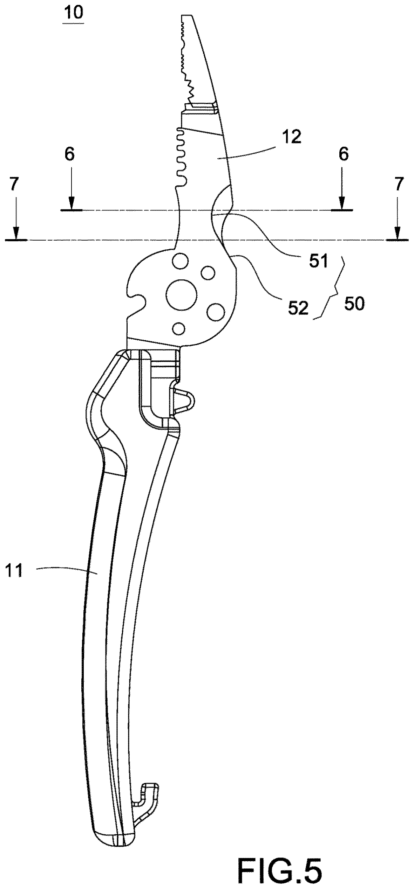

Please further refer to FIG 5 to FIG 7, which depict a front view of the first pliers body of the pliers with multifunction of this disclosure and two cross sectional views of the planer blade of the first pliers body of the pliers with multifunction of this disclosure. As shown in FIG 5, the chipping blade 50 includes an arc-shaped recess 51 and a straight cut 52 extended from the arc-shaped recess 51. Additionally, two cross sectional views are relative to the positions of the arc-shaped recess 51 and the straight cut 52 respectively.

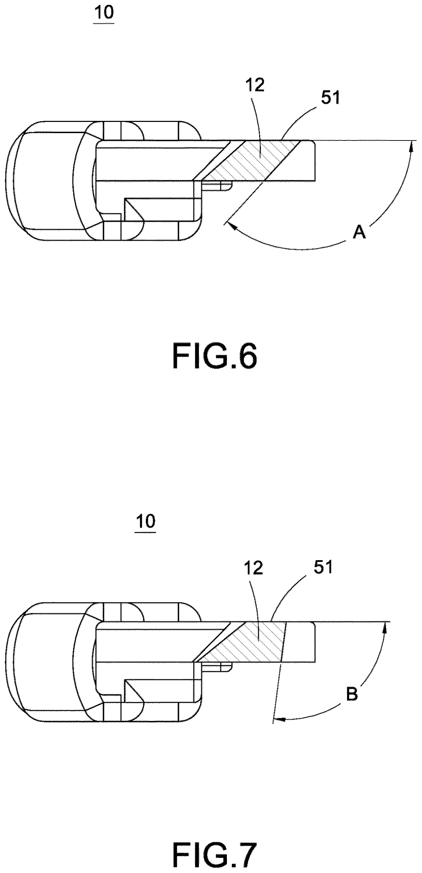

As shown in FIG 6, the arc-shaped recess 51 includes a blade angle A varied on different locations, and the range of the blade angle A is equal to or greater than 120 degrees and equal to or less than 135 degrees, and the deviation range is plus/minus 5 degrees. For example, taking the bottom of the arc-shaped recess 51 as an example, the sharpest point of the blade angle A is approximately 130 degrees. Thus, the blade angle A of the arc-shaped recess 51 is less sharp, so as to provide a safety use. Furthermore, as shown in FIG 7, the straight cut 52 includes a cut angle B, and the range of the cut angle B is equal to or greater than 85 degrees and equal to or less than 95 degrees, and the deviation range is plus/minus 5 degrees.

It should be noted that since the range of the blade angle A of the arc-shaped recess 51 is disposed between 120 degrees and 135 degrees, and the blade angle B of the straight cut 52 is disposed between 85 degrees and 95 degrees. Thus, the operation of chipping is realized mainly at the bottom of the arc-shaped recess 51 to avoid injury when the user touches the edge of the chipping blade 50.

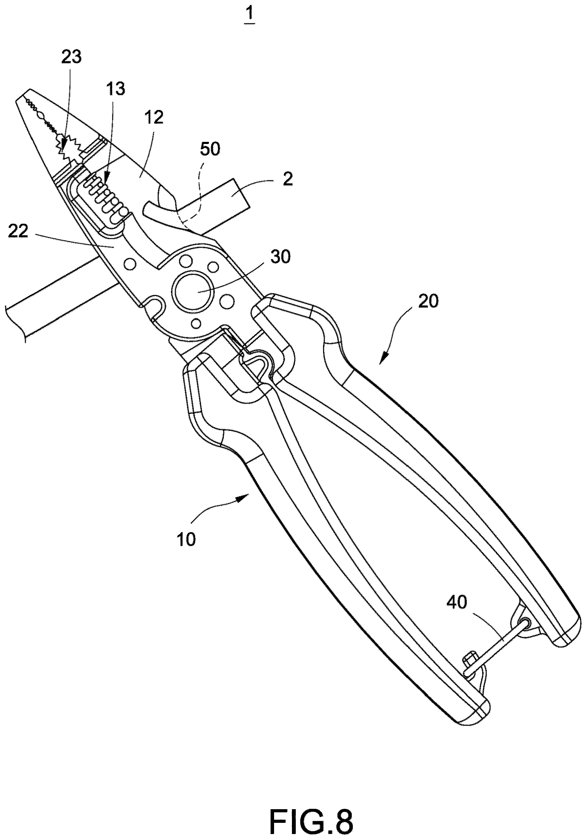

Please further refer to FIG 8, which depicts an operation schematic view of the pliers with multifunction of this disclosure when being used for chipping. As shown in the figure, the pliers 1 of this disclosure may be used to perform chipping to a workpiece 2 (especially on the middle part of the workpiece 2) by the chipping blade 50. The chipping blade 50 may perform a precise chipping operation to the workpiece 2 without causing damage to the workpiece 2. It should be noted that the first pliers body 10 is engaged with the second pliers body 20 through the buckle 40. As a result, the first clamp 12 and the second clamp 22 are held in a closed status without exposing the first pliers knife 13 and the second pliers knife 23. Therefore, the user may not touch the first pliers knife 13 or the second pliers knife 23 when performing the chipping. The user may be prevented from being injured during the operation, so as to enhance the safety of use.

## Claims

1. A pliers (1), comprising:
a first pliers body (10), comprising a first handle (11) and a first clamp (12) connected to a front end of the first handle (11), wherein a first pliers knife (13) and a first pliers back (14) are disposed on opposite sides of the first clamp (12); and
a second pliers body (20), comprising a second handle (21) and a second clamp (22) connected to a front end of the second handle (21), wherein a second pliers knife (23) and a second pliers back (24) are disposed on opposite sides of the second clamp (22), and the second clamp (22) is pivotally connected with the first clamp (12) to make the first pliers knife (13) be connectable with the second pliers knife (23);
wherein,
one of the first pliers back (14) and the second pliers back (24) comprises a chipping blade (50) configured in a concave arc shape;
**characterized in that**
the chipping blade (50) comprises an arc-shaped recess (51) and a straight cut (52) extended from the arc-shaped recess (51);
the arc-shaped recess (51) comprises a blade angle (A) varied on different locations, and a range of the blade angle (A) is equal to or greater than 120 degrees and equal to or less than 135 degrees, and a maximum value of the blade angle (A) is located on a bottom of the arc-shaped recess (51); and
the straight cut (52) comprises a cut angle (B), and a range of the cut angle (B) is equal to or greater than 85 degrees and equal to or less than 90 degrees.

2. The pliers according to claim 1, further comprising: a pivot assembly (30), comprising a bolt (31) and a stud (32), and the first pliers body (10) pivotally combined with the second pliers body (20) through the bolt (31) and the stud (32).

3. The pliers according to claim 2, wherein the first pliers body (10) comprises a first transition section (15) located between the first handle (11) and the first clamp (12), and the first transition section (15) comprises a first perforation (150);
the second pliers body (20) comprises a second transition section (25) located between the second handle (21) and the second clamp (22), and the second transition section (25) comprises a second perforation (250); and
the bolt (31) and the stud (32) are inserted in the first perforation (150) and the second perforation (250).

4. The pliers according to claim 3, wherein the first transition section (15) comprises a plurality of first cutting holes (151) disposed around the first perforation (150), and the second transition section (25) comprises a plurality of second cutting holes (251) disposed around the second perforation (250); and
the first cutting holes (151) and the second cutting holes (251) are arranged correspondingly.

5. The pliers according to claim 3, wherein the first clamp (12) comprises a first bending protrusion (16) located adjacent to a lower side of the first transition section (15), and the second clamp (22) comprises a second bending notch (26) located adjacent to a lower side of the second transition section (25); and
the first bending protrusion (16) and the second bending notch (26) are arranged correspondingly.

6. The pliers according to claim 1, wherein the first pliers knife (13) comprises a first clamping section (131), a first stripping section (132) and a first cutting section (133);
the second pliers knife (23) comprises a second clamping section (231), a second stripping section (232) and a second cutting section (233);
the first clamping section (131) and the second clamping section (231) are arranged correspondingly, the first stripping section (132) and the second stripping section (232) are arranged correspondingly, and the first cutting section (133) and the second cutting section (233) are arranged correspondingly.

7. The pliers according to claim 3, wherein the first clamp (12) comprises a first U-shaped notch (17) located adjacent to an upper side of the first transition section (15);
the second clamp (22) comprises a second U-shaped notch (27) located adjacent to an upper side of the second transition section (25); and
the first U-shaped notch (17) and the second U-shaped notch (27) are arranged correspondingly.

## Patentansprüche

1. Zange (1), umfassend:
einen ersten Zangenkörper (10), der einen ersten Griff (11) und eine erste Klemme (12) umfasst, die mit einem vorderen Ende des ersten Griffs (11) verbunden ist, wobei ein erstes Zangenmesser (13) und ein erster Zangenrücken (14) auf gegenüberliegenden Seiten der ersten Klemme (12) angeordnet sind; und
einen zweiten Zangenkörper (20), der einen zweiten Griff (21) und eine zweite Klemme (22) umfasst, die mit einem vorderen Ende des zweiten Griffs (21) verbunden ist, wobei ein zweites Zangenmesser (23) und ein zweiter Zangenrücken (24) auf gegenüberliegenden Seiten der zweiten Klemme (22) angeordnet sind, und die zweite Klemme (22) schwenkbar mit der ersten Klemme (12) verbunden ist, um das erste Zangenmesser (13) mit dem zweiten Zangenmesser (23) verbindbar zu machen;
wobei entweder der erste Zangenrücken (14) oder der zweite Zangenrücken (24) eine Zerspanungsklinge (50) aufweist, die in einer konkaven Bogenform ausgebildet ist;
**dadurch gekennzeichnet, dass**
das Zerspanungsmesser (50) eine bogenförmige Aussparung (51) und einen geraden Schnitt (52) aufweist, der sich von der bogenförmigen Aussparung (51) aus erstreckt;
die bogenförmige Aussparung (51) einen Schaufelwinkel (A) aufweist, der an verschiedenen Stellen variiert, und ein Bereich des Schaufelwinkels (A) gleich oder größer als 120 Grad und gleich oder kleiner als 135 Grad ist, und ein Maximalwert des Schaufelwinkels (A) an einem Boden der bogenförmigen Aussparung (51) angeordnet ist; und
der gerade Schnitt (52) einen Schnittwinkel (B) umfasst, und ein Bereich des Schnittwinkels (B) gleich oder größer als 85 Grad und gleich oder kleiner als 90 Grad ist.

2. Zange nach Anspruch 1, ferner umfassend: eine Schwenkanordnung (30), die einen Bolzen (31) und einen Zapfen (32) umfasst, wobei der erste Zangenkörper (10) über den Bolzen (31) und den Zapfen (32) schwenkbar mit dem zweiten Zangenkörper (20) verbunden ist.

3. Zange nach Anspruch 2, wobei der erste Zangenkörper (10) einen ersten Übergangsabschnitt (15) aufweist, der zwischen dem ersten Griff (11) und der ersten Klemme (12) angeordnet ist, und der erste Übergangsabschnitt (15) eine erste Perforation (150) aufweist;
der zweite Zangenkörper (20) einen zweiten Übergangsabschnitt (25) aufweist, der zwischen dem zweiten Griff (21) und der zweiten Klemme (22) angeordnet ist, und der zweite Übergangsabschnitt (25) eine zweite Perforation (250) aufweist; und
der Bolzen (31) und der Stift (32) in die erste Perforation (150) und die zweite Perforation (250) eingeführt werden.

4. Zange nach Anspruch 3, wobei der erste Übergangsabschnitt (15) eine Vielzahl von ersten Schneidlöchern (151) aufweist, die um die erste Perforation (150) herum angeordnet sind, und der zweite Übergangsabschnitt (25) eine Vielzahl von zweiten Schneidlöchern (251) aufweist, die um die zweite Perforation (250) herum angeordnet sind; und
die ersten Schneidlöcher (151) und die zweiten Schneidlöcher (251) entsprechend angeordnet sind.

5. Zange nach Anspruch 3, wobei die erste Klemme (12) einen ersten Biegevorsprung (16) aufweist, der an eine Unterseite des ersten Übergangsabschnitts (15) angrenzt, und die zweite Klemme (22) eine zweite Biegekerbe (26) aufweist, die an eine Unterseite des zweiten Übergangsabschnitts (25) angrenzt; und
der erste Biegevorsprung (16) und die zweite Biegekerbe (26) entsprechend angeordnet sind.

6. Zange nach Anspruch 1, wobei das erste Zangenmesser (13) einen ersten Klemmabschnitt (131), einen ersten Abisolierabschnitt (132) und einen ersten Schneidabschnitt (133) aufweist;
das zweite Zangenmesser (23) einen zweiten Klemmabschnitt (231), einen zweiten Abisolierabschnitt (232) und einen zweiten Schneidabschnitt (233) aufweist;
der erste Klemmabschnitt (131) und der zweite Klemmabschnitt (231) entsprechend angeordnet sind, der erste Abisolierabschnitt (132) und der zweite Abisolierabschnitt (232) entsprechend angeordnet sind, und der erste Schneidabschnitt (133) und der zweite Schneidabschnitt (233) entsprechend angeordnet sind.

7. Zange nach Anspruch 3, wobei die erste Klemme (12) eine erste U-förmige Kerbe (17) aufweist, die sich neben einer Oberseite des ersten Übergangsabschnitts (15) befindet;
die zweite Klemme (22) eine zweite U-förmige Kerbe (27) aufweist, die sich neben einer Oberseite des zweiten Übergangsabschnitts (25) befindet; und
die erste U-förmige Kerbe (17) und die zweite U-förmige Kerbe (27) entsprechend angeordnet sind.

## Revendications

1. Une pince (1), comprenant
un premier corps de pince (10) comprenant une première poignée (11) et une première pince (12) reliée à une extrémité avant de la première poignée (11), dans lequel une première lame de pince (13) et un premier dos de pince (14) sont disposés sur des côtés opposés de la première pince (12) ; et
un deuxième corps de pince (20) comprenant une deuxième poignée (21) et une deuxième pince (22) reliée à une extrémité avant de la deuxième poignée (21), dans lequel une deuxième lame de pince (23) et un deuxième dos de pince (24) sont disposés sur des côtés opposés de la deuxième pince (22), et la deuxième pince (22) est reliée de manière pivotante à la première pince (12) pour rendre la première lame de pince (13) connectable à la deuxième lame de pince (23) ;
dans lequel soit le premier dos de pince (14) soit le deuxième dos de pince (24) comprend une lame de coupe (50) qui est formée en une forme d'arc concave ;
**caractérisé en ce que**
la lame de coupe (50) présente un évidement en forme d'arc (51) et une coupe droite (52) qui s'étend depuis l'évidement en forme d'arc (51) ;
l'évidement en forme d'arc (51) a un angle d'aube (A) qui varie à différents endroits, et une plage de l'angle d'aube (A) est égale ou supérieure à 120 degrés et égale ou inférieure à 135 degrés, et une valeur maximale de l'angle d'aube (A) est située au niveau d'un fond de l'évidement en forme d'arc (51) ; et
la coupe droite (52) comprend un angle de coupe (B), et une partie de l'angle de coupe (B) est égale ou supérieure à 85 degrés et égale ou inférieure à 90 degrés.

2. La pince selon la revendication 1, comprenant en outre : un ensemble pivotant (30) comprenant un axe (31) et un pivot (32), le premier corps de pince (10) étant relié de manière pivotante au deuxième corps de pince (20) par l'intermédiaire de l'axe (31) et du pivot (32).

3. La pince selon la revendication 2, dans laquelle le premier corps de pince (10) comprend une première partie de transition (15) disposée entre la première poignée (11) et la première pince (12), et la première partie de transition (15) comprend une première perforation (150) ;
le second corps de pince (20) comprend une seconde partie de transition (25) disposée entre la seconde poignée (21) et la seconde pince (22), et la seconde partie de transition (25) comprend une seconde perforation (250) ; et
le boulon (31) et la goupille (32) sont insérés dans la première perforation (150) et la deuxième perforation (250).

4. La pince selon la revendication 3, dans laquelle la première partie de transition (15) comprend une pluralité de premiers trous de coupe (151) disposés autour de la première perforation (150), et la seconde partie de transition (25) comprend une pluralité de seconds trous de coupe (251) disposés autour de la seconde perforation (250) ; et
les premiers trous de coupe (151) et les deuxièmes trous de coupe (251) sont disposés de manière correspondante.

5. La pince selon la revendication 3, dans laquelle la première pince (12) comporte une première saillie de flexion (16) adjacente à une face inférieure de la première partie de transition (15), et la seconde pince (22) comporte une seconde encoche de flexion (26) adjacente à une face inférieure de la seconde partie de transition (25) ; et
la première saillie de flexion (16) et la deuxième encoche de flexion (26) sont disposées de manière correspondante.

6. La pince selon la revendication 1, dans laquelle la première lame de pince (13) comprend une première partie de serrage (131), une première partie de dénudage (132) et une première partie de coupe (133) ;
la seconde lame de pince (23) comprend une seconde partie de serrage (231), une seconde partie de dénudage (232) et une seconde partie de coupe (233) ;
la première partie de serrage (131) et la seconde partie de serrage (231) sont disposées de manière correspondante, la première partie de dénudage (132) et la seconde partie de dénudage (232) sont disposées de manière correspondante, et la première partie de coupe (133) et la seconde partie de coupe (233) sont disposées de manière correspondante.

7. La pince selon la revendication 3, dans laquelle la première pince (12) comprend une première encoche en forme de U (17) située à côté d'une face supérieure de la première partie de transition (15) ;
la seconde borne (22) comporte une seconde encoche en forme de U (27) située à proximité d'une surface supérieure de la seconde partie de transition (25) ; et
la première encoche en forme de U (17) et la deuxième encoche en forme de U (27) sont disposées de manière correspondante.
